Europäisches Patentamt

(19) European Patent Office

Office européen des brevets

(11) Publication number: **0 322 009 B1**

(12) **EUROPEAN PATENT SPECIFICATION**

(45) Date of publication of patent specification:
06.11.91 Bulletin 91/45

(21) Application number: **88202718.8**

(22) Date of filing: **29.11.88**

(51) Int. Cl.⁵: **A23L 1/317, A23L 1/315**

(54) **Food process.**

(30) Priority: **04.12.87 GB 8728384**

(43) Date of publication of application:
**28.06.89 Bulletin 89/26**

(45) Publication of the grant of the patent:
**06.11.91 Bulletin 91/45**

(84) Designated Contracting States:
**AT BE CH DE ES FR GB GR IT LI NL SE**

(56) References cited:
**GB-A- 341 760**
**GB-A- 377 766**
**GB-A- 417 756**

(73) Proprietor: **UNILEVER NV**
**Burgemeester s'Jacobplein 1 P.O. Box 760**
**NL-3000 DK Rotterdam (NL)**
(84) Designated Contracting States:
**BE CH DE ES FR GR IT LI NL SE AT**
Proprietor: **UNILEVER PLC**
**Unilever House Blackfriars P.O. Box 68**
**London EC4P 4BQ (GB)**
(84) Designated Contracting States:
**GB**

(72) Inventor: **McBride, Malcolm John**
**109 Main Street Little Harrowden**
**nr Wellingborough Northants. NN9 5BA (GB)**
Inventor: **Symien, Serge Alfred**
**70 Queen's Drive**
**Bedford MK41 9BP (GB)**

(74) Representative: **Hartong, Richard Leroy et al**
**Unilever N.V. Patent Division P.O. Box 137**
**NL-3130 AC Vlaardingen (NL)**

EP 0 322 009 B1

**Description**

This invention relates to a method of preparing a meat roll.

Meat rolls are well-known products, usually made from thin slices of meat, which may be provided at the inside with an edible material like cheese, or mixture of edible materials comprising vegetables, and are subsequently rolled up to the required product. In order to prevent their unrolling these products are frozen or a piece of iron or wood is forced through the roll.

It is known from British Patent Specification 377,766 to prepare a meat roll from a laminate comprising a layer of meat paste and a layer of coarsely chopped or sliced meat. A difficulty in the preparation of this type of product resides in the fact that the layers are not sufficiently firm and cannot easily be rolled by mechanical means.

The present invention aims at a method of providing meat rolls which have comminuted meat as their main constituant and which does not require additives like gelatin in order to form layers, which are firm enough to be handled by mechanical means.

The present invention therefore relates to a method of preparing a meat roll, in which comminuted meat is formed into a sheet, which is characterized by subjecting the sheet of comminuted meat on at least one side to a setting treatment, providing at least part of the opposite side of the sheet with at least one edible material, spirally rolling the sheet in such a way that the set side of the sheet is facing outward, and subjecting the obtained meat roll to a form stabilizing treatment.

The meat which is used in the method according to the present invention is raw meat, which may contain a small amount of partially cooked meat of mammals, like beef, pork, lamb meat, poultry meat, like chicken and turkey meat, and mixtures of any of these types of meat. The meat or mixture of meats is subsequently comminuted, for which purpose any suitable comminution device may be used. It is sometimes advantageous to use an atmosphere of carbon dioxide during comminution of the meat or the meat mixture.

In a preferred embodiment of the present invention the comminuted meat before shaping is mixed with at least one other edible material, which may be selected from the group consisting of vegetable proteins, like soybean protein, fungal proteins, like mycoprotein, caseinate, vegetables like red peppers, onion or cabbage, dairy products like cheese, egg, fruit, herbs, spices, flavouring agents, particularly savoury flavouring agents, colouring agents, curing agents, antioxidants, fats, which also may be fat fractions or fat substitutes, and mixtures of these edible materials.

The fat may be of vegetable or animal origin and may be synthetic fat. It may be a single fat or fat fraction or a mixture of fats and/or fat fractions. At least part of the fat may be replaced by a low-calorie fat-replacer. Particularly suitable fat replacers are the edible polyesters of polyhydric alcohols having at least four free hydroxyl groups, such as polyglycerols, sugars or sugar alcohols, and saturated or unsaturated, straight or branched alkyl chain $C_8$-$C_{24}$ fatty acids. The polyhydric alcohol fatty acid polyesters include any such polyesters or mixtures thereof of which, on an average, at least 70% of the polyhydric alcohol hydroxyl groups have been esterified with the fatty acids. Also fatty alkyl ether derivatives of glycerol, esters of $C_8$-$C_{24}$ fatty alcohols and polycarboxylic acids, waxes and microcrystalline cellulose can be used for replacing at least part of the fat.

After the meat has been comminuted, the comminute is shaped into a sheet or slice or any suitable extended flat surface, preferably by rolling or by extrusion. By suitable selection of the types of meat, e.g. dark and light meat, visual contrasts and patterns can be obtained. Also the sheet of comminuted meat itself may be a laminate having layers of different colour and/or flavour, so that the final meat roll obtained is multilayered product, having different colours and/or flavours.

The thickness of the sheet of comminuted meat or the laminate of comminuted meats should be such that the subsequent setting of at least one side of the sheet is still possible, without setting the entire single or laminated sheet. In practice thicknesses between 3 mm and 25 mm, particularly between 4 mm and 10 mm have been found suitable.

After having formed the comminuted meat into a single or laminated sheet, at least one side of the sheet is set, preferably by means of a heat treatment which may be effected by passing the sheet over a heated surface, or by spraying or contacting the required side with an innocuous acid, like acetic acid. The setting treatment is carried out in such a way that the sheet at least at one side is set over a certain thickness of the sheet, which is always less than the total thickness of the sheet. A sheet of thickness 6 mm for example is set over a thickness of about 3 mm. If the single or laminate sheet of comminuted meat is given a setting treatment at both sides, then this is done in such a way that the core of the sheet is still uneffected by the treatment. When one surface of the sheet of comminuted meat is set, at least part of the opposite side of the sheet is provided with an edible material, but this may also be done before the setting treatment of the sheet. The edible material is selected from the group consisting of herbs, spices, vegetables, usually in finely divided form, flavouring agents, bread crumbs, dairy products, egg, like cheese, fruit, and mixtures of these materials. Preferably the edible material contrasts with the single or laminate sheet of comminuted meat in colour and/or flavour.

The sheet of comminuted meat is then spirally wound in such a way that the set side of the sheet is facing outward. If both sides of the single or laminate sheet of comminuted meat have been given a setting treatment, then of course it is immaterial which side of the sheet is facing outward when rolling the sheet to form a meat roll.

Subsequently the obtained meat roll is subjected to a form stabilizing treatment, which preferably is a heat treatment, such that the entire meat roll is cooked. The single or laminate sheet of comminuted meat may also at least partially be provided with an edible adhesive on at least one side of the sheet, so that upon rolling the sheet the integrity of the meat roll is enhanced. This is particularly useful if both sides of the sheet of comminuted meat are given a setting treatment. As edible adhesive for example a protein solution or dispersion may be used, which may also comprise colouring and/or flavouring agents, which adhesive in the form stabilizing treatment of the roll ensures good adhesion between the various layers of the meat roll.

The obtained meat roll may be packaged and chilled, or in another embodiment of the present invention, it may be dipped into a batter, provided with bread crumbs and deep-fat fried in oil or shortening, after which the product may be frozen and packaged. The product may be packaged separately or in any required number, optionally together with separately packed sauce or dressing or mustard or any other edible material to be used as garnish or as additional component of a snack type or complete meal.

The meat roll may also be sliced perpendicular or oblique to its axis in slices of appropriate thickness and these slices may be garnished before packaging and further handled as described for the complete meat roll herebefore.

### EXAMPLE I

A raw poultry meat dough was prepared according to the following recipe (in weight percentages) :

| | |
|---|---|
| Cured chicken breasts | 65.00% |
| Farina | 1.00% |
| Brat | 34.00% |

the composition of the brat being (in weight percentages) :

| | |
|---|---|
| Chicken fat | 16.00% |
| White chicken trimmings | 26.00% |
| Farina | 17.50% |
| Water | 37.00% |
| Curing salts, flavours, preservative | 3.50% |

The ingredients were mixed and milled to a fine consistency in a Hobart vertical Micro-cut emulsifier (Trade Mark) using a 0.8 mm cutting gap.

The dough was transferred to a piston operated extrusion device and forced under pressure through a slot nozzle of 6 mm × 60 mm. The extrudate was collected in 600 mm long strips, each weighing approximately 220 grams, on aluminium foil sheets laid on a moving conveyor. The aluminium foil was turned up at the edges to form a tray and placed on a shallow water bath at 70°C for 0.5 minute.

The strip of comminuted meat dough was then removed from the tray, placed on a flat surface and approximately 2.5 grams of dried, flaked marjoram were sprinkled evenly on the uncooked side of the comminuted meat strip. The strip of sprinkled dough was rolled up into a cylinder and tightly encased in aluminium foil, taking care to seal both ends so as to form a reasonably water-tight container while retaining the cylindrical shape of the product.

The prepared wrapped product was then placed in a cooking device, preheated at 75°C and allowed to set for one hour (until the core temperature had reached 70°C). The product was then removed from the cooker and allowed to cool before unwrapping. An attractive looking, good tasting poultry meat-based roll was obtained.

3

EXAMPLE II

A raw pork and ham dough was prepared, using the following recipe (in weight percentages) :

| | |
|---|---|
| Pork lean meat (70/30, dry cured) | 12.00% |
| Shoulder chaps (dry cured) | 34.00% |
| Cooked ham trimmings | 25.00% |
| Brat | 29.00% |

the composition of the brat being (in weight percentages) :

| | |
|---|---|
| Pork meat | 51.00% |
| Pork fat | 26.00% |
| Farina | 2.00% |
| Water | 17.00% |
| Curing salts,flavours | |
| preservative | 4.00% |

The dough formation and product preparation were performed as described in Example I, with the exception of the filling, which in this example consisted of a dispersion of dried parsley in egg white (5% by weight). This filling was applied to the uncooked surface of the comminuted meat strip in a thickness of about 1 mm, during which approximately 40 grams of filling per strip was used.

Finally an attractive meat roll was obtained which upon cutting in slices had clearly visible and different tasting boundaries between the various layers.

**Claims**

1. A method of preparing a meat roll, in which comminuted meat is formed into a sheet, which is characterised by subjecting the sheet of comminuted meat on at least one side to a setting treatment, providing at least part of the opposite side of the sheet of comminuted meat with at least one edible material, spirally rolling the sheet of comminuted meat in such a way that the set side of the sheet is facing outward, and subjecting the obtained meat roll to a form stabilizing treatment.

2. A method according to Claim 1, in which the meat is raw meat.

3. A method according to Claim 1 or 2, in which the meat is selected from the group consisting of mammal meat, poultry meat, and mixtures thereof.

4. A method according to any one of Claims 1-3, in which into the meat after comminution, but before shaping, at least one edible material is incorporated, selected from the group consisting of vegetable proteins, fungal proteins, caseinate, vegetables, dairy products, egg, fruit, herbs, spices, flavouring agents, colouring agents, curing agents, antioxidants, fats, low-calorie fat replacers and mixtures thereof.

5. A method according to Claim 4, in which the low-calorie fat replacer is an edible polyester of a polyhydric alcohol having at least four free hydroxyl groups, such as polyglycerols, sugars or sugar alcohols and saturated or unsaturated, straight or branched alkyl chain $C_8$-$C_{24}$ fatty acids, of which on an average at least 70% of the polyhydric alcohol hydroxyl groups have been esterified with the fatty acids.

6. A method according to any one of Claims 1-5, in which the shaping of the comminuted meat is effected by rolling.

7. A method according to any one of Claims 1-5, in which the shaping of the comminuted meat is effected by extrusion.

8. A method according to any one of Claims 1-7, in which the sheet of comminuted meat is a laminate.

9. A method according to any one of Claims 1-8, in which the sheet of comminuted meat exhibits a pattern of differently coloured meats.

10. A method according to any one of Claims 1-9, in which the sheet of comminuted meat has a thickness between 3 and 25 mm, preferably between 4 and 10 mm.

EP 0 322 009 B1

11. A method according to any one of Claims 1-10, in which the setting treatment is a treatment with heat or with an innocuous acid.

12. A method according to any one of Claims 1-11, in which the opposite side of the sheet of comminuted meat is set over a distance, which is smaller than the thickness of the sheet.

13. A method according to any one of Claims 1-12, in which the opposite side of the sheet of comminuted meat is at least partly provided with an edible material selected from the group consisting of herbs, spices, vegetables, flavouring agents, bread crumbs, dairy products, egg, fruit and mixtures thereof.

14. A method according to any one of Claims 1-13, in which the edible material is applied onto the sheet of comminuted meat before the setting treatment.

15. A method according to any one of Claims 1-13, in which the form stabilizing treatment is a heat treatment.

16. A method according to any one of Claims 1-15, in which at least one side of the sheet of comminuted meat is at least partially provided with an edible adhesive.

17. A method according to Claim 16, in which the edible adhesive is a solution or dispersion of a protein.

18. A method according to any one of Claims 1-17, in which the obtained meat roll is battered, breaded and deep-fried.

19. A method according to any one of Claims 1-17, in which the obtained meat roll is frozen.

20. A method according to any one of Claims 1-17, in which the obtained meat roll is sliced perpendicular or oblique to its axis.

**Revendications**

1. Une méthode pour préparer un rouleau de viande dans laquelle de la viande pulvérisée forme une feuille, caractérisée en ce que la feuille de viande pulvérisée est soumise, au moins sur un côté, à un traitement de positionnement, en ce qu'au moins une partie du côté opposé de la feuille de viande pulvérisée est munie d'au moins un matériau comestible, en ce que la feuille de viande pulvérisée est enroulée en spirale de telle sorte que le côté positionné de la feuille soit tourné vers l'extérieur, et en ce que le rouleau de viande obtenu est soumis à un traitement de stabilisation de forme.

2. Une méthode selon la Revendication 1, dans laquelle la viande est de la viande crue.

3. Une méthode selon la Revendication 1 ou 2, dans laquelle la viande est choisie dans le groupe comprenant la viande de mammifères, la viande de volaille, et des mélanges de celles-ci.

4. Une méthode selon l'une des Revendications 1 à 3, dans laquelle on incorpore à la viande au moins un matériau comestible après la pulvérisation mais avant la mise en forme, le matériau comestible étant choisi dans le groupe comprenant les protéines végétales, les protéines fongiques, le caséinate, les légumes, les produits laitiers, les oeufs, les fruits, les arômates, les épices, les agents de sapidité, les colorants, les agents de saumure, les anti-oxydants, les matières grasses, les produits basses calories de substitution à la matière grasse, et des mélanges de ceux-ci.

5. Une méthode selon la Revendication 4, dans laquelle le produit basses calories de substitution à la matière grasse est un polyester comestible d'un alcool polyhydrique ayant au moins quatre groupes hydroxyles libres, tel que les polyglycérols, les sucres ou les alcools de sucre, et les acides gras en $C_8$-$C_{24}$ saturés ou insaturés, en chaîne droite ou ramifiée, pour lesquels en moyenne au moins 70% des groupes hydroxyles d'alcool polyhydrique ont été estérifiés avec les acides gras.

6. Une méthode selon l'une des Revendications 1 à 5, dans laquelle la mise en forme de la viande pulvérisée est effectuée par roulage.

7. Une méthode selon l'une des Revendications 1 à 5, dans laquelle la mise en forme de la viande pulvérisée est effectuée par extension.

8. Une méthode selon l'une des Revendications 1 à 7, dans laquelle la feuille de viande pulvérisée est un laminé.

9. Une méthode selon l'une des Revendications 1 à 8, dans laquelle la feuille de viande pulvérisée montre un motif de viandes de différentes couleurs.

10. Une méthode selon l'une des Revendications 1 à 9, dans laquelle la feuille de viande pulvérisée a une épaisseur comprise entre 3 et 25 mm, de préférence entre 4 et 10 mm.

11. Une méthode selon l'une des Revendications 1 à 10, dans laquelle le traitement de positionnement est un traitement thermique ou avec un acide inoffensif.

12. Une méthode selon l'une des Revendications 1 à 11, dans laquelle le côté opposé de la feuille de viande pulvérisée est positionné sur une distance qui est inférieure à l'épaisseur de la feuille.

13. Une méthode selon l'une des Revendications 1 à 12, dans laquelle le côté opposé de la feuille de viande

EP 0 322 009 B1

pulvérisée est au moins partiellement muni d'un matériau comestible selectionné dans le groupe comprenant les arômates, les épices, les légumes, les agents de sapidité, la chapelure, les produits laitiers, les oeufs, les fruits et des mélanges de ceux-ci.

14. Une méthode selon l'une des Revendications 1 à 13, dans laquelle le matériau comestible est appliqué sur la feuille de viande pulvérisée avant le traitement de positionnement.

15. Une méthode selon l'une des Revendications 1 à 13, dans laquelle le traitement de stabilisation de forme est un traitement thermique.

16. Une méthode selon l'une des Revendications 1 à 15, dans laquelle au moins un côté de la feuille de viande pulvérisée est au moins partiellement muni d'un adhésif comestible.

17. Une méthode selon la Revendication 16, dans laquelle l'adhésif comestible est une solution ou une dispersion de protéine.

18. Une méthode selon l'une des Revendications 1 à 17, dans laquelle le rouleau de viande obtenu est recouvert d'une pâte à frire, est pané et frit.

19. Une méthode selon l'une des Revendications 1 à 17, dans laquelle le rouleau de viande est surgelé.

20. Une méthode selon l'une des Revendications 19 à 17, dans laquelle le rouleau de viande obtenu est découpé en tranches suivant une direction perpendiculaire ou oblique par rapport à son axe.


## Patentansprüche

1. Verfahren zum Herstellen einer Fleischroulade, in dem zerkleinertes Fleisch zu einer Schicht geformt wird, welches dadurch gekennzeichnet ist, daß die Schicht von zerkleinertem Fleisch zumindest an einer Seite einer Härtungsbehandlung unterworfen wird, zumindest ein Teil der gegenüberliegenden Seite der Schicht von zerkleinertem Fleisch mit zumindest einem eßbaren Material versehen wird, die Schicht von zerkleinertem Fleisch derart spiralförmig gerollt wird, daß die gehärtete Seite der Schicht nach außen gerichtet ist, und die erhaltene Fleischroulade einer Formstabilisierungsbehandlung unterworfen wird.

2. Verfahren nach Anspruch 1, worin das Fleisch rohes Fleisch ist.

3. Verfahren nach Anspruch 1 oder 2, worin das Fleisch ausgewählt ist aus der Gruppe bestehend aus einem Säugetierfleisch, Geflügelfleisch und Mischungen hievon.

4. Verfahren nach einem der Ansprüche 1 bis 3, worin in das Fleisch vor dem Zerkleinern, aber vor dem Formen, zumindest ein eßbares Material eingearbeitet wird, ausgewählt aus der Gruppe bestehend aus Pflanzenproteinen, Pilzproteinen, Caseinat, Gemüse, Milchprodukten, Ei, Obst, Kräutern, Gewürzen, Geschmacksstoffen, Farbstoffen, Härtungsmitteln, Antioxidantien, Fetten, Fettsubstituten mit niedrigem Kaloriengehalt und Mischungen hievon.

5. Verfahren nach Anspruch 4, worin das Fettsubstitut mit niedrigem Kaloriengehalt ein eßbarer Polyester eines mehrwertigen Alkohols mit mindestens vier freien Hydroxylgruppen ist, wie Polyglycerine, Zucker oder Zuckeralkohole und gesättigte oder ungesättigte $C_8$-$C_{24}$-Fettsäuren mit gerader oder verzweigter Alkylkette, wobei durchschnittlich mindestens 70% der Hydroxylgruppen des mehrwertigen Alkohols mit den Fettsäuren verestert wurden.

6. Verfahren nach einem der Ansprüche 1 bis 5, worin das Formen des zerkleinerten Fleisches durch Rollen bewirkt wird.

7. Verfahren nach einem der Ansprüche 1 bis 5, worin das Formen des zerkleinerten Fleisches durch Extrudieren bewirkt wird.

8. Verfahren nach einem der Ansprüche 1 bis 7, worin die Schicht von zerkleinertem Fleisch ein Laminat ist.

9. Verfahren nach einem der Ansprüche 1 bis 8, worin die Schicht von zerkleinertem Fleisch ein Muster von verschiedenfarbigen Fleischarten zeigt.

10. Verfahren nach einem der Ansprüche 1 bis 9, worin die Schicht von zerkleinertem Fleisch eine Dicke von 3 bis 25 mm, vorzugsweise 4 bis 10 mm, aufweist.

11. Verfahren nach einem der Ansprüche 1 bis 10, worin die Härtungsbehandlung eine Behandlung mit Wärme oder mit einer unschädlichen Säure ist.

12. Verfahren nach einem der Ansprüche 1 bis 11, worin die gegenüberliegende Seite der Schicht von zerkleinertem Fleisch über eine Distanz gehärtet wird, die kleiner ist als die Dicke der Schicht.

13. Verfahren nach einem der Ansprüche 1 bis 12, worin die gegenüberliegende Seite der Schicht von zerkleinertem Fleisch zumindest teilweise mit einem eßbaren Material ausgewählt aus der Gruppe bestehend aus Kräutern, Gewürzen, Gemüse, Geschmacksstoffen, Bröseln, Milchprodukten, Ei, Obst und Mischungen hievon versehen wird.

14. Verfahren nach einem der Ansprüche 1 bis 13, worin das eßbare Material auf die Schicht von zerklei-

6

nertem Fleisch vor der Härtungsbehandlung aufgebracht wird.

15. Verfahren nach einem der Ansprüche 1 bis 13, worin die Formstabilisierungsbehandlung eine Wärmebehandlung ist.

16. Verfahren nach einem der Ansprüche 1 bis 15, worin zumindest eine Seite der Schicht von zerkleinertem Fleisch zumindest teilweise mit einem eßbaren Klebstoff versehen wird.

17. Verfahren nach Anspruch 16, worin der eßbare Klebstoff eine Lösung oder Dispersion eines Proteins ist.

18. Verfahren nach einem der Ansprüche 1 bis 17, worin die erhaltene Fleischroulade in Teig getaucht, paniert und frittiert wird.

19. Verfahren nach einem der Ansprüche 1 bis 17, worin die erhaltene Fleischroulade gefroren wird.

20. Verfahren nach einem der Ansprüche 1 bis 17, worin die erhaltene Fleischroulade senkrecht oder schräg zu ihrer Achse in Scheiben geschnitten wird.